# EUROPEAN PATENT SPECIFICATION

(11) **EP 1 010 609 B1**
(45) Date of publication and mention of the grant of the patent: **04.01.2006**
(21) Application number: 99204251.5
(22) Date of filing: 10.12.1999
(51) Int. Cl.: B62D 55/30

(54) **Track-tensioning wheel for agricultural crawler tractors**
Rad für Kettenspannvorrichtung für landwirtschaftliches Raupenfahrzeug
Roue pour dispositif de tension de chaîne pour tracteur agricole à chenille

(30) Priority: 18.12.1998 IT TO981059
(43) Date of publication of application: 21.06.2000
(73) Proprietor: CNH Italia S.p.A., 41100 Modena (IT)
(72) Inventor: Pertusi, Pierluigi, 41011 Campogalliano, Modena (IT)
(74) Representative: Vandenbroucke, Alberic

(56) References cited:
- DE-C- 376 251
- US-A- 3 997 217
- US-A- 5 829 849

## Description

The present invention relates to a track-tensioning wheel for agricultural crawler tractors.

As well known in the art, some types of agricultural crawler tractors comprise, on each side of the vehicle, a metal track looped about a traction sprocket, a number of supporting wheels and a track-tensioning wheel.

The track-tensioning wheel is connected to the tractor frame by a hydraulic tensioning device which pushes the track-tensioning wheel against the track to keep the track taut.

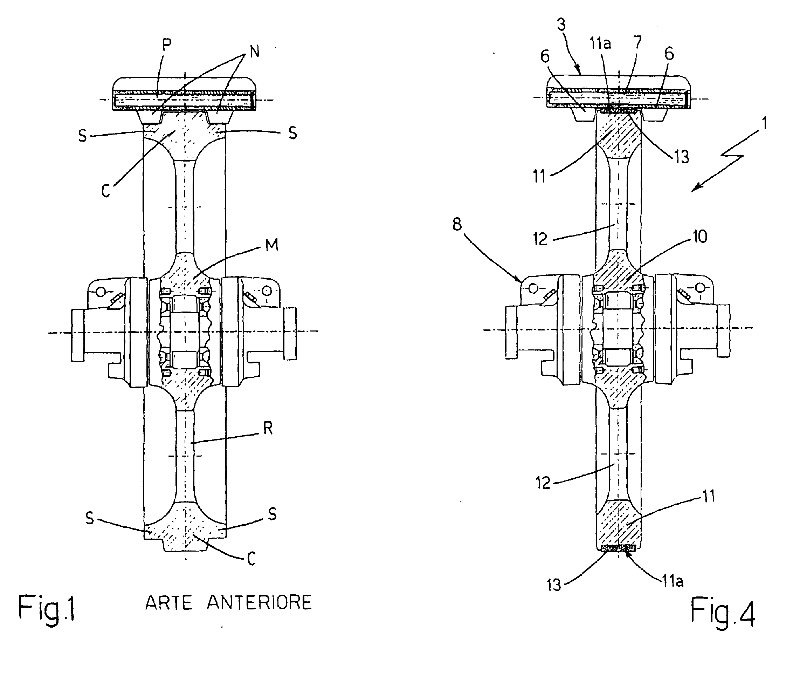

With reference to Figure 1, currently used track-tensioning wheels comprise a hub M mounted for rotation on a supporting pin on the hydraulic tensioning device; an annular rim C coaxial with hub M and on which the track is wound; and a number of spokes R extending radially from the body of hub M to connect annular rim C rigidly to hub M. Annular rim C has two lateral shoulders S on which the links N of the metal track rest. The fastening pins P connecting track links N extend over the cylindrical outer surface of annular rim C, without contacting the rim itself.

Currently used track-tensioning wheels have the major drawback of being extremely noisy : as the track advances, in fact, the metal links N tend to knock heavily against the lateral shoulders S of the annular rim C, thus resulting in a noise level which is particularly high at fast operating speeds.

A track-tensioning wheel according to the preamble of claim 1 is known from US-A-5.829.849 according to which the preamble of claim 1 is established. In this document, it is recognized that the presence of shoulders on the track-tensioning wheel may present problems, especially as regards wear. Therefore, a wheel is proposed which engages only the central longitudinal part of the track, more specifically in the central area of the fastening pins. To avoid wear of the pins, bushings are provided around the pins. Although this may effectively solve the wear problem, be it in a quite expensive manner as each connecting pin has to be provided with a bushing, the problem of noise generation is not addressed since a metal to metal contact between the bushings and the track-tensioning wheel upon rotation of the wheel remains.

It is therefore the object of the present invention to provide a track-tensioning wheel which is less noisy in use than those currently used.

According to the present invention, there is provided a track-tensioning wheel for an agricultural crawler tractor, the tractor comprising a track having a number of metal links connected to one another by connecting pins and the track-tensioning wheel comprising :
- a hub; and
- an annular rim angularly integral with said hub, having no lateral shoulders and comprising a substantially cylindrical outer surface around which said track is looped.

The track tensioning wheel is characterized in that :
- said pins rest on said cylindrical outer surface; and
- said annular rim comprises, on the substantially cylindrical outer surface, an annular projection made of plastic material for damping the noise produced by the pins of the track striking the body of the annular rim on which the pins of the track rest.

A non-limiting embodiment of the present invention will now be described, by way of example, with reference to the accompanying drawings, in which :
Figure 1 shows a prior art arrangement, already discussed above;
Figure 2 shows a side view, with parts in section and parts removed for clarity, of an agricultural crawler tractor featuring a track-tensioning wheel in accordance with the teachings of the present invention;
Figure 3 shows a detail of Figure 2; and
Figure 4 shows a section of the Figure 2 and 3 track-tensioning wheel.

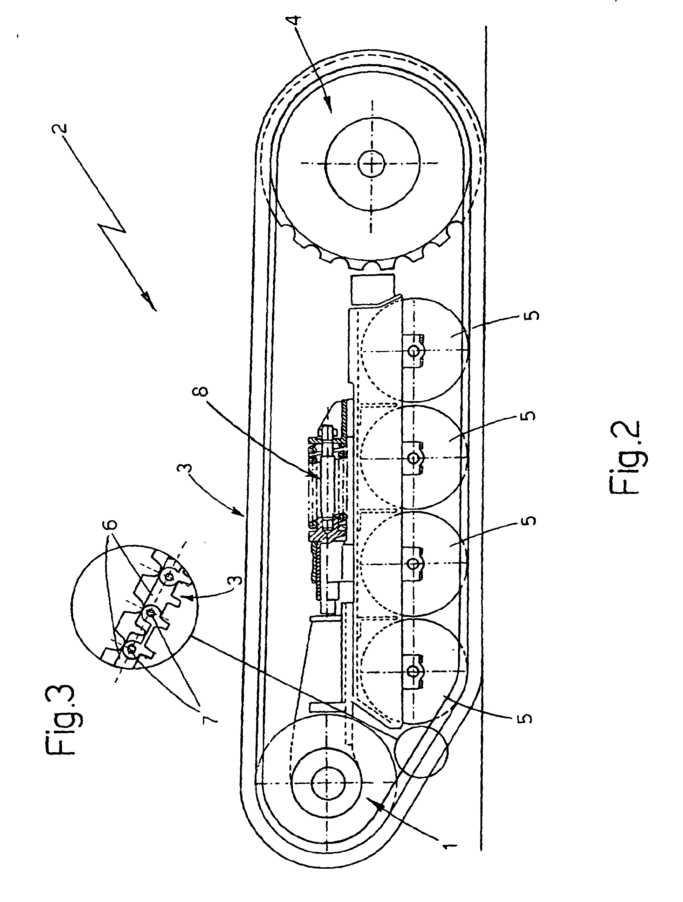

With reference to Figures 2, 3 and 4, number 1 indicates as a whole a track-tensioning wheel incorporated in an agricultural tractor 2 (of which only a track is shown) having, on each side, a metal track 3 looped about a traction sprocket 4, about a number of supporting wheels 5, and about track-tensioning wheel 1.

More specifically, track 3 comprises a number of metal links 6 connected to one another by metal connecting pins 7. The track-tensioning wheel 1 is connected to the tractor frame by a known hydraulic tensioning device 8 which pushes track-tensioning wheel 1 against track 3 to keep track 3 taut.

With reference to Figures 3 and 4, track-tensioning wheel 1 comprises a central hub 10 mounted for rotation on a supporting pin on hydraulic tensioning device 8. The wheel 1 further comprises an annular rim 11 coaxial with hub 10 and a number of spokes 12 extending radially outwardly from the body of hub 10 to connect annular rim 11 rigidly to hub 10.

Annular rim 11 has no lateral shoulders, so that the pins 7 connecting the links 6 of track 3 rest on the cylindrical outer surface 11a of annular rim 11.

In the example shown, annular rim 11 comprises, on the cylindrical outer surface 11a, an annular projection 13 made of plastic material for damping the noise made by the pins 7 knocking in rapid succession against the body of annular rim 11.

The operation of the track-tensioning wheel 1 is easily deducible from the foregoing description with no further explanation required.

The advantages of the track-tensioning wheel 1 are obvious. Firstly, eliminating the lateral shoulders of the rim 11 prevents the links 6 of track 3 from knocking against the body of the wheel, thus greatly reducing the noise level. And secondly, eliminating the lateral shoulders reduces the moment of inertia of annular rim 11 and, therefore, mechanical stress on spokes 12 of the wheel 1. Eliminating the lateral shoulders also has the advantage of reducing the amount of metal required to produce track-tensioning wheel 1, thus reducing manufacturing cost. The annular projection 13 also provides for further reducing the noise level of track 3.

## Claims

1. A track-tensioning wheel (1) for an agricultural crawler tractor (2), the tractor comprising a track (3) having a number of metal links (3) connected to one another by connecting pins (7) and the track-tensioning wheel (1) comprising :
- a hub (10); and
- an annular rim (11) angularly integral with said hub (10), having no lateral shoulders and comprising a substantially cylindrical outer surface (11a) around which said track (3) is looped, and
**characterized in that** :
- said pins (7) rest on said cylindrical outer surface (11a); and
- said annular rim (11) comprises, on the substantially cylindrical outer surface (11a), an annular projection (13) made of plastic material for damping the noise produced by the pins (7) of the track (3) striking the body of the annular rim (11) on which the pins (7) of the track (3) rest.

## Patentansprüche

1. Ketten-Spannrad (1) für einen landwirtschaftlichen Raupenschlepper (2), wobei der Raupenschlepper eine Raupenkette (3) mit einer Anzahl von metallischen Gliedern (3) umfasst, die miteinander über Verbindungsbolzen (7) verbunden sind, wobei das Ketten-Spannrad (1) folgendes umfasst:
- eine Nabe (10); und
- einen kreisringförmigen Kranz (11), der winkelmäßig einstückig mit der Nabe (10) ausgebildet ist und keine seitlichen Schultern aufweist und eine im wesentlichen zylindrische Außenoberfläche (11a) umfasst, um die die Raupenkette (3) gelegt ist; und
**dadurch gekennzeichnet, dass** :
- die Bolzen (7) auf der zylindrischen Außenoberfläche (11a) aufliegen; und
- der kreisringförmige Kranz (11) auf der im wesentlichen zylindrischen Außenoberfläche (11a) einen kreisringförmigen Vorsprung (13) umfasst, der aus Kunststoffmaterial hergestellt ist, um die Geräusche zu dämpfen, die durch die Bolzen (7) der Raupenkette (3) hervorgerufen werden, die auf den Hauptteil des kreisringförmigen Kranzes (11) schlagen, auf dem die Bolzen (7) der Raupenkette (3) ruhen.

## Revendications

1. Roue de tension de la chenille (1) pour un tracteur à chenilles agricole (2), le tracteur comprenant une chenille (3) possédant un certain nombre de liaisons métalliques (3) interconnectées en reliant les broches (7) et la roue de tension de la chenille (1) comprenant :
- un moyeu (10) ; et
- un bord annulaire (11) intégral angulairement avec ledit moyeu (10), sans épaulements latéraux et comprenant une surface extérieure (11a) substantiellement cylindrique autour de laquelle ladite chenille (3) s'enroule.
La roue de tension de la chenille est **caractérisée en ce que** :
- lesdites broches (7) reposent sur ladite surface extérieure cylindrique (11 a) ; et
- ledit bord annulaire (11) comprend, sur la surface extérieure (11a) substantiellement cylindrique, une projection annulaire (13) en matière plastique pour atténuer le bruit produit par les broches (7) de la chenille (3) frappant le corps du bord annulaire (11) sur lequel reposent les broches (7) de la chenille (3).
